# EUROPÄISCHE PATENTANMELDUNG

(11) **EP 2 955 294 A1**
(43) Veröffentlichungstag der Anmeldung: **16.12.2015**
(21) Anmeldenummer: 14172282.7
(22) Anmeldetag: 13.06.2014
(51) Int. Cl.: E04B 5/04, C04B 28/04

(54) **Spannbetonhohlplatte**

(71) Anmelder: Elbe Spannbetonwerk GmbH & Co. KG, 06785 Oranienbaum-Wörlitz (DE)
(72) Erfinder: Münzberg, Thomas, 04509 Delitzsch (DE); Endris, Sven, 56332 Oberfell (DE)
(74) Vertreter: Geyer, Fehners & Partner

(57) **Zusammenfassung**

Die Erfindung betrifft eine Spannbetonhohlplatte, welche einen oberen Plattenspiegel (1) und einen unteren Plattenspiegel (2) umfasst. Der untere Plattenspiegel (2) ist zum oberen Plattenspiegel (1) parallel ausgerichtet. Die Spannbetonhohlplatte umfasst entlang einer Längsrichtung der Platte ausgerichtete Stege (3), welche den unteren Plattenspiegel (2) mit dem oberen Plattenspiegel (1) verbinden. Im unteren Plattenspiegel (2) sind im Bereich der Stege (3) vorgespannte Spannlitzen (5) in der Längsrichtung angeordnet. Sie sind zu einer Außenfläche (6) des unteren Plattenspiegels (2) mit einem vorgegebenen Mindestachsabstand beabstandet.

Erfindungsgemäß weist bei einer solchen Spannbetonhohlplatte der untere Plattenspiegel (2) eine Dicke von mindestens dem Anderthalbfachen des Mindestachsabstands auf.

## Beschreibung

### Gebiet der Erfindung

Die Erfindung betrifft eine Spannbetonhohlplatte, welche einen oberen Plattenspiegel und einen unteren Plattenspiegel umfasst, wobei der untere Plattenspiegel zum oberen Plattenspiegel parallel ausgerichtet ist. Die Spannbetonhohlplatte weist Stege auf, die entlang einer Längsrichtung ausgerichtet sind und den unteren mit dem oberen Plattenspiegel verbinden. Im unteren Plattenspiegel sind im Bereich der Stege in der Längsrichtung vorgespannte Spannlitzen angeordnet, welche zu einer Außenfläche des unteren Plattenspiegels in einem vorgegebenen Mindestachsabstand beabstandet sind.

### Stand der Technik

Spannbetonhohlplatten werden im Stand der Technik als unterstützungsfreie Systeme bei vielen Bauvorhaben und Bauwerken eingesetzt. Es handelt sich um vorproduzierte Bauelemente, beispielsweise für stützfreie Deckenkonstruktionen, welche in einer Vielzahl von Gebäudetypen verwendet werden können; in diesem Fall spricht man auch von Spannbetonfertigdecken. Durch ihre Produkteigenschaften in Sachen Tragfähigkeit, Spannweite und Belastbarkeit sowie durch ihr geringes Eigengewicht und die Vorspannung können große Stützweiten realisiert werden. Außerdem ist es möglich, Tragwerkkonstruktionen, Fundamente und weitere aufgehende Bauteile angepasst zu dimensionieren. Sie werden üblicherweise in zwei Fertigungsverfahren hergestellt, entweder in Gleitfertigung oder in Extrusionsfertigung bzw. Strangpressfertigung, d.h. sie werden im wesentlichen durch ihr Querschnittprofil quer zur Vorschubrichtung des Strangs und die Zusammensetzung des Betons charakterisiert. Die Längsrichtung entspricht dieser Vorschubrichtung bzw. der Richtung senkrecht zum Querschnittprofil.

Spannbetonhohlplatten werden in einer Vielzahl von Größen und Abmessungen insbesondere im Fertigbau beispielsweise zur Realisierung von Boden- oder Deckenkonstruktionen - hier wird häufig die Bezeichnung "Spannbetonfertigdecke" anstelle von Spannbetonhohlplatte verwendet - eingesetzt.

Solche Spannbetonhohlplatten werden beispielsweise in einem Übersichtsartikel von T. Münzberg, "Eine Alternative zu Stahlbeton - Einsatz von Spannbeton in der Deckenfertigung" erschienen in der Zeitschrift "Beton- und Fertigteiltechnik", in Ausgabe 08 im Jahr 2009, auf S. 14-20, beschrieben. Gegenüber Stahlbetonplatten zeichnen sich die Spannbetonhohlplatten durch die Kombination der Vorspannung durch die Litze mit Hohlräumen aus, die zu einer hohen Gewichtsersparnis führen, was die Herstellung und Verarbeitung als Fertigteil ermöglicht. Insbesondere kann bei den aufgehenden Bauteilen - wie zum Beispiel Wänden und Unterzügen - Material eingespart werden, ohne dass eine Einschränkung hinsichtlich der Nutzung und Gebrauchstauglichkeit des Bauwerks erfolgt. Die Hohlräume - die sich parallel zu den Stegen in Längsrichtung erstrecken - können prinzipiell beliebig geformt sein, ihre Ausgestaltung hängt u.a. auch von der zu erwartenden Belastung ab. Beispielsweise können die Hohlräume oval, rund oder rechteckig sein, oder auch Kombinationen von polygonalen Formen und gekrümmten Formen aufweisen, jeweils bezogen auf den Querschnitt eines Hohlraums.

Nachteilig bei Spannbetonhohlplatten ist, dass sie sich nicht an Decken gleicher Stahlbetonbalken anschließen lassen. Auch ist es nicht möglich, eine Flachdecke unter Berücksichtigung von punktförmigen Lagerungen zu konstruieren. Ein weiterer Nachteil ist, dass die Querkrafttragfähigkeit bei biegeweicher Lagerung, d.h. einer Auflagerung auf Balken oder Unterzügen, nur unter Berücksichtigung einer Abminderung der zulässigen Querkraft möglich ist. Insbesondere, wenn die Spannbetonhohlplatte mit längsverlaufenden Aussparungen an der Unterseite versehen ist, gestaltet sich auch der Nachweis der statischen Tragfähigkeit als sehr aufwendig. Die Querkrafttragfähigkeit solcher Spannbetonhohlplatten ist daher in der Regel begrenzt, es gibt jedoch im Stand der Technik Lösungen, welche die Querkrafttragfähigkeit bei solchen Platten verbessern.

Um für die Verwendung beim Bau von Gebäuden wie Wohnhäusern, Parkhäusern, Krankenhäusern, Schulen, Industrie- und Verwaltungsbauten zugelassen zu werden, müssen solche Spannbetonhohlplatten außerdem eine vorgegebene Festigkeit gegenüber der Beanspruchung durch Brand aufweisen, entsprechende Regelungen finden sind in der DIN 4102. Üblicherweise wird verlangt, dass Decken und Dächer aus Spannbetonhohlplatten in diese Feuerwiderstandsklasse F90 eingestuft werden, d.h. sie müssen in der Lage sein, einem Brand 90 Minuten Stand zu halten.

Unter Brandbeanspruchung wird die Unterseite, der untere Spiegel der Spannbetonhohlplatte stark erhitzt. Das Material verhält sich unter diesen Umständen nichtlinear, es kommt zu komplexen Dehnungs- und Spannungszuständen, u.a. dadurch verursacht, dass sich bei hohen Temperaturen die Festigkeiten sowohl des verbauten Spannstahls als auch des Betons ändern. Bei hohen Temperaturen versagt die Spannung durch die Stahllitzen aufgrund einsetzendem Verbundverlust zwischen Stahllitzen und Beton, während Beton aufgrund des eingelagerten Wassers, welches zu verdampfen beginnt und innerhalb des Betons einen Überdruck aufbaut, dazu neigt, Stück für Stück abzuplatzen. Hinzu kommt, dass bei Spannbetonhohlplatten konstruktionsbedingt nicht die Möglichkeit besteht, Bewehrungen einzubauen, welche die erforderliche Betondeckung erfüllen können.

Bisher erfolgte die Einstufung in die Feuerwiderstandklassen rein anhand numerischer Simulationen des Verhaltens bei Brand. Um beispielsweise in die Feuerwiderstandsklasse F90 eingestuft und zugelassen werden zu können, muss u.a. der Mindestachsabstand der unteren Spanngliedlage, d.h. der Achsen der Spannlitzen zur Unterkante des unteren Plattenspiegels gemäß DIN 4102-22 mindestens 40 mm betragen.

Im Rahmen neuer Zulassungsverfahren wurden die Anforderungen an die Nachweisführung für eine Einstufung in die Feuerwiderstandsklasse F90 bzw. REI90 jedoch verändert. Unter anderem ist nun der Nachweis unter Einfluss der sogenannten Einheitstemperaturkurve (EKT) zu führen, wobei die Verwendung einer definierten, maximalen Vertikallast sichergestellt sein muss und als Zwangsbedingung eine Dehnbehinderung in Querrichtung vorzusehen ist. Die bisher im Stand der Technik bekannten Spannbetonhohlplatten erfüllen diese Anforderungen nicht.

In der EP 1 307 326 B1 ist eine Spannbetonhohlplatte mit erhöhter Querkrafttragfähigkeit offenbart. Die dort beschriebenen Spannbetonhohlplatten zeichnen sich dadurch aus, dass sie aus einem Faserbeton gefertigt sind, wobei als Fasern Stahlfasern mit einem Volumenanteil von mindestens 0,1% verwendet werden, welche eine Querschnittsfläche zwischen 0,1 mm² und 1 mm² und eine mittlere Länge zwischen 20 mm und 100 mm haben. Auf diese Weise kann die Tragfähigkeit und Belastbarkeit der mit diesem Beton gefertigten Spannbetonhohlplatten gegenüber solchen Platten aus Beton, dem keine Stahlfasern beigemischt sind, in Querrichtung, d.h. quer zu den vorgespannten Litzen, erhöht werden. Jedoch unterscheidet sich die in der EP 1 307 326 B1 beschriebene Spannbetonhohlplatte sich in ihrer Brandfestigkeit nicht von solchen Platten, die mit üblichem, Beton hergestellt werden, da die Stahlfasern das gleiche Brandverhalten wie die Spannlitzen zeigen.

### Beschreibung der Erfindung

Aufgabe der Erfindung ist es daher, das Brandverhalten von Spannbetonhohlplatten zu verbessern, so dass diese die Bedingungen der Feuerwiderstandsklasse F90 nach DIN 4102 bzw. REI 90 nach DIN EN 13501 auch in der Praxis erfüllen. Bevorzugt soll gleichzeitig die Querkrafttragfähigkeit erhöht werden.

Diese Aufgabe wird bei einer Spannbetonhohlplatte der eingangs beschriebenen Art dadurch gelöst, dass der untere Plattenspiegel eine Dicke von mindestens dem Anderthalbfachen des Mindestachsabstands aufweist.

Bei einem vorgegebenen Mindestachsabstand von beispielsweise 4 cm hat der untere Plattenspiegel dann eine Mindestdicke von 6 cm. Durch die Erhöhung der Dicke des unteren Plattenspiegels wird die Wärmeableitung erhöht, da aufgrund der höheren Masse des Betons die Wärmespeicherfähigkeit bzw. Wärmekapazität erhöht wird. Auch das Abplatzverhalten wird verbessert: Unter Brandeinwirkung wird der untere Spiegel durch Abplatzen von Material nach und nach zerstört. Durch die höhere Dicke des unteren Plattenspiegels wird die Betondeckung zum Hohlraum um mindestens zwei Zentimeter erhöht. Durch die verstärkte Betonmasse verbessert sich auf diese Weise das Wärmeableitverhalten. Die Spannlitzen sind länger durch die ummantelnde Betonmasse vor Temperaturanstieg geschützt und das Versagen infolge einer hohen Temperatur verzögert sich. Auch die Querkrafttragfähigkeit wird durch den dickeren unteren Plattenspiegel erhöht.

Ein wesentlicher Vorteil liegt aber darin, dass die Spannlitzen nicht mehr - wie im Stand der Technik - in einer Linie mit der Unterkante der Hohlräume liegen, wie es bei einem unteren Plattenspiegel mit einer Dicke von 4 cm im Stand der Technik der Fall ist: Dort sind die Spannlitzen üblicherweise unter den Stegen angeordnet, um überhaupt eine ausreichende Betondeckung zu erreichen. Durch die Erhöhung der Betondeckung wird die Temperaturerhöhung der Spannlitze bei Brand verringert und das Versagen zeitlich verzögert, so dass die Brandbeständigkeit verbessert wird. Außerdem lassen sich auch die Spannlitzen flexibler positionieren, da auch außerhalb des Bereichs der Stege genügend Betondeckung vorhanden ist, und lässt sich ggf. ihre Anzahl erhöhen.

In einer besonders bevorzugten Ausgestaltung weist der untere Plattenspiegel eine Dicke von mindestens 7cm auf. Diese Dicke hat sich als besonders geeignet im Hinblick auf einen möglichst geringen Materialverbrauch einerseits als auch eine hohe Brandbeständigkeit andererseits erwiesen. Der Puffer in Form des Betons für die diesem gegenüber temperaturempfindlichere Spannlitze ist dann nahezu doppelt so groß wie im Stand der Technik, so dass die erforderliche Feuerwiderstandsklasse von F90/RE190 in jedem Fall erreicht wird.

Die Brandbeständigkeit kann weiter verbessert werden, wenn im unteren Plattenspiegel eine Querbewehrung angeordnet bzw. in diesen eingearbeitet ist. Während der Beton hohe Druckkräfte, aber kaum Zugkräfte aufnehmen kann, ist die Resistenz einer Querbewehrung gegenüber Zugkräften deutlich stärker. Vorzugsweise ist die Querbewehrung als Stahlbewehrung ausgestaltet. Dies kann realisiert werden, indem beispielsweise quer zu den Spannlitzen Stahlstäbe entlang der Längsrichtung der Spannbetonhohlplatte zueinander beabstandet angeordnet sind. Besonders bevorzugt ist die Querbewehrung jedoch als Stahlgitter ausgestaltet, auf diese Weise wird die Querkrafttragfähigkeit besonders stark erhöht. Im Verbund ist diese Konstruktion aus Stahl und Beton daher in der Lage, sowohl hohe Zugkräfte als auch hohe Druckkräfte zu absorbieren. Die bei Brand aufgrund der unterschiedlichen Materialeigenschaften und durch die unterschiedliche Belastung der Materialien Beton und Stahl auftretenden Spannungen und daraus resultierenden Zugkräfte können von der Querbewehrung aufgenommen werden und vermeiden bzw. verzögern zumindest das lokale Versagen des Betons durch Abplatzen. Durch die Absorption horizontaler Kräfte in Folge von Brand wird die Stabilität der Spannbetonhohlplatte, insbesondere auch die Belastung einzelner Plattenstege betreffend, stabilisiert, da einzelne Stege nicht mehr so stark belastet werden. Ein weiterer Vorteil liegt auch darin, dass durch die Querbewehrung die Bildung von bei üblichen Spannbetonhohlplatten ohne Querbewehrung bei der Anbringung von Deckendurchbrüchen oder Aussparungen auftretenden Haarrissen verhindert werden kann. Damit wird es möglich, Deckendurchbrüche umfangreicher und flexibler anzuordnen.

Das Stahlgitter ist bevorzugt aus Stahlstäben zusammengesetzt, welche einen Durchmesser von mindestens 3 mm, bevorzugt zwischen 5 mm und 7 mm aufweisen; besonders bevorzugt liegt der Durchmesser der Stahlstäbe bei 6 mm. Auf diese Weise wird eine ausreichende Erhöhung der Querkrafttragfähigkeit bei minimalem Materialverbrauch erreicht.

Unabhängig davon oder auch in Ergänzung zur Wahl des Durchmessers der Stahlstäbe im Stahlgitter kann - insbesondere in Abhängigkeit von der projektierten Querkrafttragfähigkeit und Feuerwiderstandsfähigkeit - der Abstand zweier benachbarter Stahlstäbe im Gitter gewählt werden. Üblicherweise wird ein Abstand zwischen 5 cm und 20 cm gewählt, beispielsweise 7 cm oder 16 cm. In diesem Bereich wird einerseits eine große Erhöhung der Querkrafttragfähigkeit und damit der Brandsicherheit erreicht, andererseits wird sichergestellt, dass sich ein qualitativ guter Verbund zwischen Beton und Stahlstäben bildet.

Die Querbewehrung kann dabei ober- oder unterhalb der Spannlitzen angeordnet sein. Eine Anordnung unterhalb der Spannlitze hat den Vorteil, dass einerseits die Betonabplatzung nur bis zur angeordneten Lage der Bewehrung erfolgt, andererseits die lastverteilende Wirkung im Brandfall erhöht wird. Eine oberhalb der Spannlitzen angeordnete Querbewehrung gewährleistet eine Verteilung der Zug- und Druckkräfte bei Brand auf die dem Brand abgewandte, kältere Seite des unteren Plattenspiegels. In jedem Falle ist die Querbewehrung jedoch im unteren Plattenspiegel angeordnet. Ein dickerer unterer Plattenspiegel ermöglicht in diesem Falle ein problemloses Unterbringen der Querbewehrung auch oberhalb der Spannlitzen, was bei dem im Stand der Technik bekannten Platten nicht der Fall ist.

Eine höhere Brandbeständigkeit lässt sich aber nicht nur durch konstruktive Änderungen an der Spannbetonhohlplatte selbst - was nachteilig immer mit der Bereitstellung neuer oder veränderter Formen für die entsprechenden Fertigungsmaschinen wie eingangs erwähnt einhergeht und damit zumindest anfangs sehr kostenintensiv ist - erreichen, sondern auch durch eine veränderte oder spezielle Zusammensetzung des für die Spannbetonhohlplatten verwendeten Betons bzw. der für ihre Herstellung verwendeten Betonmischung. Eine hohe Brandbeständigkeit kann bei einer Spannbetonhohlplatte der eingangs beschriebenen Art, bei welcher der untere Plattenspiegel eine Dicke wie im Stand der Technik - also eine Dicke, welche etwa dem Mindestachsabstand entspricht - aufweist, auch erreicht werden, indem das Betonmaterial, d.h. der Beton bzw. die Betonmischung, welche für die Herstellung der Spannbetonhohlplatte verwendet wurde, einen Volumenanteil von bis zu 5 kg Polypropylenfasern - auch als PP-Fasern abgekürzt - pro m³ Beton enthält. Bevorzugt beträgt der Anteil 2 kg und/oder weisen die PP-Fasern eine mittlere Länge zwischen 5 mm und 30 mm, besonders bevorzugt von 6 mm oder 12 mm, und/oder eine mittlere Dicke zwischen 5 µm und 40 µm auf, besonders bevorzugt von 15,4 µm oder 19,8 µm auf. Beispielsweise können die PP-Fasern eine mittlere Länge von 12 mm und eine mittlere Dicke von 15,4 µm aufweisen. Solcherart bemessene PP-Fasern eignen sich besonders gut zur Erhöhung der Brandfestigkeit, ohne Beeinträchtigungen - etwa der Tragfähigkeit - in Kauf nehmen zu müssen, insbesondere bei einem Anteil von 2 kg. Durch die Einmischung von PP-Fasern in die Betonmischung wird ebenfalls das Abplatzverhalten des Betons bei Brandeinwirkung verbessert. Im Falle eines Brandes und des daraus resultierenden Temperaturanstiegs schmelzen die PP-Fasern und hinterlassen kleine Kanäle, durch die Wasserdampf, welcher aus dem bisher im Beton gebundenen Wasser entsteht, entweichen kann, so dass der entstehende Druck auf den unteren Plattenspiegel reduziert wird und er in der Folge nicht oder nur vermindert abplatzt, da sich dort kein Überdruck durch verdampftes Wasser mehr bilden kann. Der dahinter liegende Spannstahl der Spannlitzen wird auf diese Weise länger vor dem Versagen geschützt.

Während dieser Zusatz von PP-Fasern bei jedem beliebigen Beton möglich ist, um die Brandfestigkeit zu erhöhen, gibt es auch besondere Betonmischungen, mit denen die Brandbeständigkeit einer Spannbetonhohlplatte verbessert werden kann, auch ohne dass dieser Mischung PP-Fasern zugesetzt sind. Eine solche Betonmischung, die sich besonders gut für die Herstellung einer Spannbetonhohlplatte mit einer Feuerwiderstandsklasse F90/RE190, besonders in Zusammenwirkung mit einem unterem Plattenspiegel, dessen Dicke mindestens dem Anderthalbfachen des Mindestachsabstands entspricht, eignet, umfasst beispielsweise pro m³ Beton zwischen 300 kg und 380 kg Zement der Klasse CEM I 52,5 R und/oder der Klasse CEM II 52,5 R, also klassischen Portlandzement oder Portlandkompositzement mit hoher Anfangsfestigkeit und hoher Normfestigkeit. Die Betonmischung umfasst außerdem zwischen 490 kg und 610 kg Splitt mit Korngrößen zwischen 8 mm und 11 mm, zwischen 500 kg und 690 kg Kies mit Korngrößen zwischen 2 mm und 8 mm, zwischen 490 kg und 700 kg Sand mit Korngrößen bis zu 2 mm, zwischen 95 kg und 140 kg Feinsand mit Korngrößen bis zu 1 mm sowie einen Wasseranteil zwischen 80 l und 150 l pro m³ Beton. Aufgrund dieser Zusammensetzung gelingt eine Herstellung der Spannbetonhohlplatten mit hoher Betonfestigkeit und hoher Frühhochfestigkeit, wobei sich die Zementumlagerung des Splittmaterials positiv auswirkt. Mit der Rezeptur hergestellte Spannbetonhohlplatten weisen eine höhere Brandfestigkeit auf als die im Stand der Technik bekannten. Durch die hohe Randhärte und die hohe Festigkeit des verwendeten Splitts ergibt sich eine besonders hohe Verbundwirkung im fertigen Beton. Diese ist ungleich höher als bei der Verwendung von Kies, da dort die Randhärte durch das Rundkorn des Kieses geringer ist. Auch ist die Festigkeit des Kieses gegenüber Splitt geringer.

Besonders gut werden diese Anforderungen erfüllt, wenn die Betonmischung pro m³ Beton 317 kg Zement der Klasse CEM I 52,5 R und / oder der Klasse CEM II 52,5 R umfasst, wobei beide Zementsorten bevorzugt im gleichen Verhältnis, also 50:50 beigemischt werden. Die Betonmischung umfasst dann außerdem 594 kg Splitt mit Korngrößen zwischen 8 mm und 11 mm, 609 kg Kies mit Korngrößen zwischen 2 mm und 8 mm, 667 kg Sand mit Korngrößen bis zu 2 mm, 142 kg Feinsand mit Korngrößen bis zu 1 mm und einen Wasseranteil von 126 l.

Während Spannbetonhohlplatten aus diesem Beton bereits eine hohe Feuerwiderstandsfähigkeit - im Zusammenspiel mit einem dickeren unteren Plattenspiegel von mindestens dem Anderthalbfachen des Mindestachsabstands in der Klasse F90 - aufweisen, kann das Brandverhalten weiter verbessert werden, indem der Betonmischung außerdem ein Anteil von bis zu 5 kg Polypropylenfasern pro m³ Beton, bevorzugt 2 kg, hinzugefügt wird. Bei Temperaturanstieg infolge eines Brandes schmelzen die Polypropylenfasern und hinterlassen kleine Kanäle, durch die im Beton gebundenes Wasser als Wasserdampf entweichen kann, so dass sich in Hohlräumen im Beton kein Überdruck bilden kann, der zum Abplatzen der Randschicht des Deckenunterspiegels führen könnte. Das Abplatzen wird hinausgezögert und somit der im unteren Plattenspiegel liegende Spannstahl der Spannlitze länger vor dem Versagen geschützt. Die Polypropylenfasern haben bevorzugt eine mittlere Länge in einem Bereich zwischen 5 mm und 30 mm, besonders bevorzugt 6 mm oder 12 mm, und / oder eine mittlere Dicke in einem Bereich zwischen 5 µm und 40 µm, besonders bevorzugt 15,4 µm oder 19,8 µm. Beispielsweise erreicht man mit PP-Fasern einer mittleren Länge von 12 mm und einem mittleren Durchmesser von 15,4 µm hervorragende Ergebnisse. Bei der Zusetzung von PP-Fasern zu nach obigen Rezepturen hergestellten Betonmischungen erfüllt eine daraus hergestellte Spannbetonhohlplatte auch mit einem unteren Plattenspiegel, der nur eine dem Mindestachsabstand entsprechende Dicke von beispielsweise 4 cm aufweist, die Anforderungen der Feuerwiderstandsklasse F90.

Eine solche Betonmischung mit PP-Fasern, wie sie vorangehend beschrieben wurde, lässt sich daher zur Herstellung einer Spannbetonhohlplatte verwenden, welche einen oberen Plattenspiegel, einen unteren Plattenspiegel, der zum oberen Plattenspiegel parallel ausgerichtet ist, und Stege, die entlang einer Längsrichtung der Spannbetonhohlplatte ausgerichtet sind und den unteren mit dem oberen Plattenspiegel verbinden, sowie vorgespannte Spannlitzen, welche im unteren Bereich des Plattenspiegels im Bereich der Stege in Längsrichtung angeordnet und zu einer Außenfläche des unteren Plattenspiegels mit einem vorgegebenen Mindestachsabstand beabstandet sind, umfasst.

Insbesondere lässt sich diese Betonmischung - mit oder ohne PP-Fasern - auch zur Herstellung eine Spannbetonhohlplatte, wie sie vorangehend beschrieben wurde, mit einem dickeren unteren Plattenspiegel, der mindestens dem Anderthalbfachen des Mindestachsabstandes entspricht, und / oder mit einer Querbewehrung, verwenden.

### Kurze Beschreibung der Zeichnungen

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine Spannbetonhohlplatte, wie sie im Stand der Technik bekannt ist,
- Fig. 2: eine erste Ausführung einer Spannbetonhohlplatte mit einem dickeren unteren Plattenspiegel,
- Fig. 3: eine zweite Ausgestaltung einer Spannbetonhohlplatte mit einer unterhalb der Spannlitze angeordneten Querbewehrung,
- Fig. 4: eine weitere Ausgestaltung einer Spannbetonhohlplatte mit unterhalb der Spannlitzen angeordneter Querbewehrung,
- Fig. 5: eine Spannbetonhohlplatte mit einer über den Spannlitzen angeordneten Querbewehrung,
- Fig. 6: eine Spannbetonhohlplatte aus einer Betonmischung, welche Polypropylenfasern enthält und
- Fig. 7: eine weitere Ausführung einer solchen Spannbetonhohlplatte mit einem dickeren unteren Plattenspiegel.

### Ausführliche Beschreibung der Zeichnungen

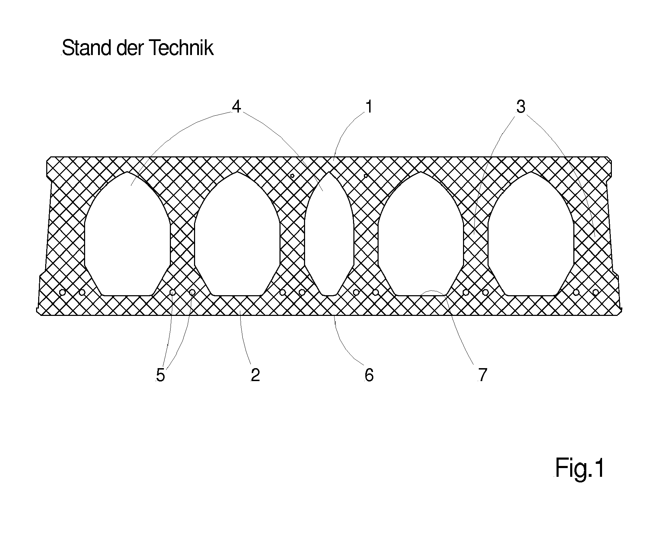

Fig. 1 zeigt zunächst eine Spannbetonhohlplatte, wie sie im Stand der Technik bekannt ist. Die hier gezeigte Spannbetonhohlplatte weist beispielsweise eine Breite von 120 cm und eine Höhe von 32 cm auf. Sie umfasst einen oberen Plattenspiegel 1 und einen unteren Plattenspiegel 2, welcher zum oberen Plattenspiegel 1 parallel ausgebildet ist. Die Spannbetonhohlplatte ist hier im Querschnitt gezeigt. Der obere Plattenspiegel 1 und der untere Plattenspiegel 2 sind mit Stegen 3 verbunden, welche entlang einer Längsrichtung der Platte - hier also senkrecht zur Zeichenebene - ausgerichtet sind. Die Längsrichtung entspricht der Fertigungsrichtung. Die Stege 3 am Rand sind aus Stabilitätsgründen etwas dicker, als diejenigen Innern der Spannbetonhohlplatte ausgeführt. Zwischen den Stegen 3, nach unten und nach oben begrenzt durch den unteren Plattenspiegel 2 bzw. den oberen Plattenspiegel 1, befinden sich Hohlräume 4. Die Querschnittsform der Hohlräume 4 ist im Prinzip beliebig und wird in der Regel in Abhängigkeit von der projektierten Tragfähigkeit bzw. Belastbarkeit festgelegt, oft sind die Hohlräume im Querschnitt kreisförmig, oval oder eckig. Im vorliegenden Fall weisen sie im obigen Bereich eine Bogenform auf, welche eine hohe Belastbarkeit in vertikaler Richtung nach unten ermöglicht. Auch die Anzahl der Hohlräume ist nicht festgelegt und hängt von dem geplanten Einsatz der Spannbetonhohlplatte ab. Anstelle der hier gezeigten vier größeren Hohlräume und des einen kleineren Hohlraums ist es beispielsweise auch möglich, eine solche Spannbetonhohlplatte ausschließlich mit kleineren Hohlräumen zu gestalten, beispielsweise mit sieben Hohlräumen bei gleicher Breite. Bei solchen Platten ist die Tragfähigkeit höher, jedoch wird auch mehr Beton verbaut. Im unteren Plattenspiegel 2 sind im Bereich der Stege 3 vorgespannte Spannlitzen 5 in der Längsrichtung angeordnet. Diese sind zu einer Außenfläche 6 des unteren Plattenspiegels 1 mit einem vorgegebenen Mindestachsabstand beabstandet. Dieser Mindestachsabstand beträgt hier 4 cm, festgelegt in der DIN 4102, womit bisher eine Einstufung in die Feuerwiderstandsklasse F90/RE190 möglich war. Die Dicke des unteren Plattenspiegels 2 beträgt ebenfalls 4 cm, so dass die Spannlitzen 5 auf gleicher Höhe mit einer Innenfläche 7 des unteren Plattenspiegels liegen, verdeckt nur durch entsprechende Verdickungen der Stege 3 im Bereich des Anstoßes an den unteren Plattenspiegel 2. Eine solchermaßen aufgebaute Spannbetonhohlplatte erfüllt zwar theoretisch - aufgrund von Berechnungen - die Bedingungen für eine Einstufung in die Feuerwiderstandsklasse F90, was jedoch in praktischen Tests nicht nachgewiesen werden konnte.

Um die Brandbeständigkeit bzw. die Feuerwiderstandsfähigkeit zu erhöhen, lassen sich verschiedene Maßnahmen ergreifen, wie sie im folgenden anhand von Beispielen geschildert werden.

Eine Möglichkeit besteht beispielsweise darin, die Spannbetonhohlplatte so zu verändern, dass der untere Plattenspiegel 2 eine Dicke von mindestens dem Anderthalbfachen des Mindestachsabstandes aufweist. Ist als Mindestachsabstand in entsprechenden Vorschriften beispielsweise ein Wert von 4 cm genannt, so wird die Dicke um das Anderthalbfache erhöht, also auf 6 cm. Versuche haben gezeigt, dass auf diese Weise die Feuerwiderstandsfähigkeit bzw. Brandbeständigkeit erhöht werden kann, da die Spannlitzen 5 dann von mehr Beton umgeben sind, was zur Folge hat, dass ein Brand länger benötigt, um diese freizulegen bzw. den umliegenden Beton so zu erwärmen und zum Abplatzen zu bringen, dass die Spannlitzen 5 anfangen aufgrund der steigenden Temperatur ihre Tragfähigkeit und Spannung verlieren.

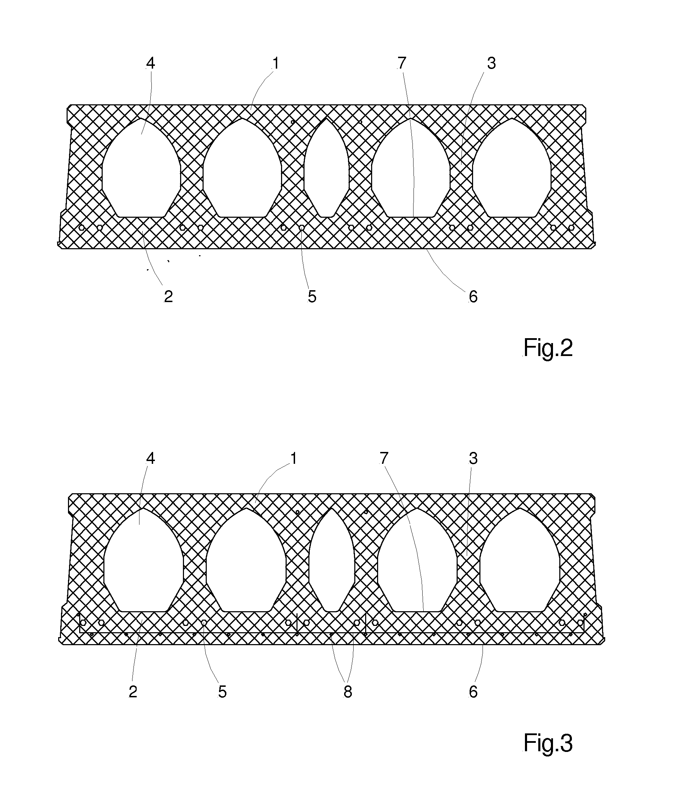

Als besonders bevorzugt hat sich hier eine Dicke des unteren Plattenspiegels 2 von mindestens 7 cm bewährt, hier befinden sich die Spannlitzen 5 dann nahezu in der Mitte des unteren Plattenspiegels 2, so dass eine bestmögliche Brandbeständigkeit bei geringstmöglichem Materialverbrauch an Beton in der Feuerwiderstandsklasse F90 gewährleistet werden kann. Eine Spannbetonhohlplatte mit einem unteren Plattenspiegel 2, der eine Dicke von 7 cm aufweist, ist beispielsweise in Fig. 2 gezeigt. Auch die Querkrafttragfähigkeit wird durch den dickeren unteren Plattenspiegel 2 etwas erhöht, was ebenfalls dazu führt, dass die Spannbetonhohlplatte erst zu einem späteren Zeitpunkt als die aus dem Stand der Technik bekannte Platte versagt, wenn sie durch Brand von unten angegriffen wird.

Brandbeständigkeit und Querkrafttragfähigkeit können weiter erhöht werden, wenn im unteren Plattenspiegel 2 eine Querbewehrung angeordnet ist. Beispiele für Spannbetonhohlplatten mit Querbewehrungen sind in den Fig. 3-5 gezeigt. In allen drei Fällen ist die Querbewehrung als Stahlgitter ausgestaltet.

Das Stahlgitter ist jeweils aus Stahlstäben 8 zusammengesetzt, der Durchmesser der Stäbe beträgt mindestens 3 mm und liegt bevorzugt zwischen 5 und 7 mm. Der Abstand zweier benachbarter Stahlstäbe 8 im Stahlgitter wird so gewählt, dass die Brandbeständigkeit ausreichend erhöht wird und gleichzeitig so wenig Material wie möglich eingesetzt wird. Üblicherweise liegt der Abstand zweier benachbarter Stahlstäbe 8 zwischen 5 cm und 20 cm. Bei der in Fig.3 gezeigten Spannbetonhohlplatte ist die Querbewehrung unterhalb der Spannlitzen 5 angeordnet. Der Durchmesser der Stahlstäbe 8 beträgt 6 mm, die Stahlstäbe 8 sind im Stahlgitter mit einem Abstand von 7,5 cm zueinander angeordnet. Die Dicke des unteren Plattenspiegels beträgt 7 cm.

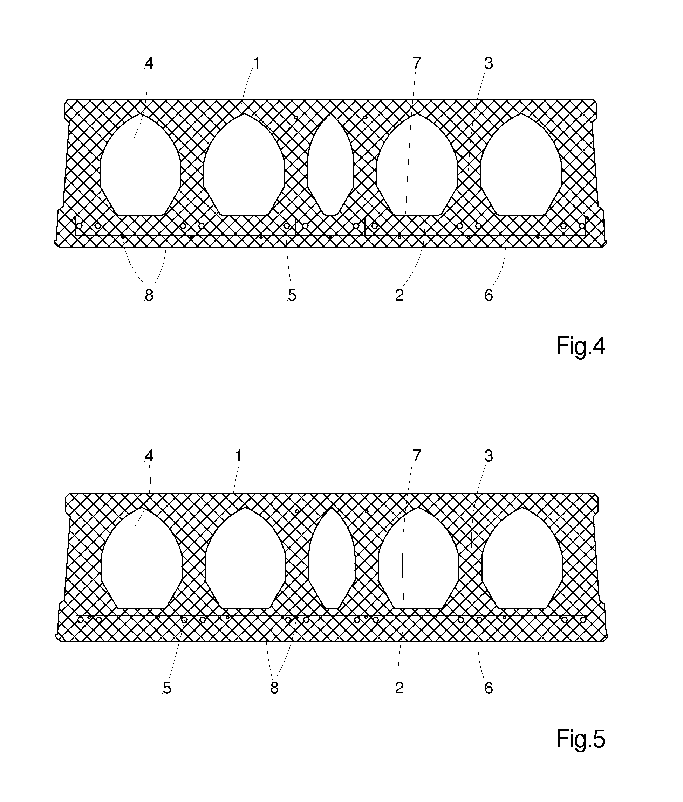

Die in Fig. 4 gezeigte Ausführung einer Spannbetonhohlplatte unterscheidet sich von der in Fig.3 gezeigten nur dadurch, dass der Abstand der Stahlstäbe 8 hier 15 cm beträgt.

Aufgrund des dickeren unteren Plattenspiegels 2 mit einer Dicke von 7 cm ist es nun auch möglich, die Querbewehrung oberhalb der Spannlitzen 5 anzuordnen, eine solche Ausführung ist in Fig. 5 dargestellt. Der Abstand der Stahlstäbe 8 beträgt hier ebenfalls 15 cm, ihr Durchmesser beträgt 6 mm.

Eine Möglichkeit, die Brandbeständigkeit weiter zu erhöhen und die geforderte Feuerwiderstandsklasse F90 mit einem höheren Puffer zu erreichen, besteht darin, eine speziell zusammengesetzte Betonmischung für die Herstellung von Spannbetonhohlplatten zu verwenden. Eine solchermaßen geeignete Mischung umfasst pro m³ Beton zwischen 300 kg und 380 kg Zement der Klasse CEM I 52,5 R und / oder der Klasse CEM II 52,5 R, zwischen 490 kg und 610 kg Splitt mit Korngrößen zwischen 8 mm und 11 mm, zwischen 500 kg und 690 kg Kies mit Korngrößen zwischen 2 mm und 8 mm, zwischen 490 kg und 700 kg Sand mit Korngrößen bis zu 2 mm, zwischen 95 kg und 140 kg Feinsand mit Korngrößen bis zu 1 mm und einen Wasseranteil zwischen 80 l und 150 l. Auch mit einer solchen Betonmischung lässt sich bereits eine erhöhte Feuerwiderstandsfähigkeit bzw. Brandbeständigkeit erreichen, die eine Einstufung in die Feuerwiderstandsklasse F90 erlaubt.

Eine besonders geeignete Betonmischung umfasst pro m³ Beton 317 kg Zement der Klasse CEM I-52,5 R und / oder der Klasse CEM II 52,5 R, bevorzugt im gleichen Verhältnis, 594 kg Splitt mit Korngrößen zwischen 8 mm und 11 mm, 609 kg Kies mit Korngrößen zwischen 2 mm und 8 mm, 667 kg Sand mit Korngrößen bis zu 2 mm, 142 kg Feinsand mit Korngrößen bis zu 1 mm und einen Wasseranteil von 126 l.

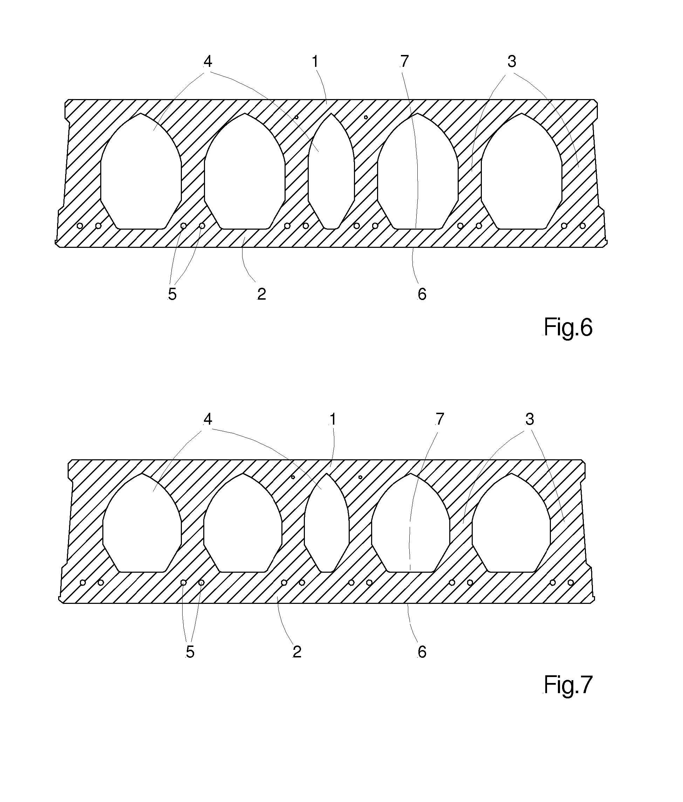

Die Feuerwiderstandsfähigkeit bzw. Brandbeständigkeit lässt sich alternativ oder in Ergänzung zu einem dickeren unteren Plattenspiegel auch erhöhen, wenn die zur Herstellung verwendete Betonmischung - insbesondere eine Betonmischung auf Basis der vorangehend beschriebenen Rezepturen - außerdem einen Anteil von bis zu 5 kg Polypropylenfasern, auch als PP-Fasern abgekürzt, pro m³ Beton umfasst, bevorzugt etwa 2 kg. Mit einer solchen Betonmischung hergestellte Spannbetonhohlplatten sind in Fig.6 mit einer Dicke des unteren Plattenspiegels 2 von 4 cm und in Fig.7 mit einer Dicke des unteren Plattenspiegels von 7 cm dargestellt, erkennbar durch die andere Schraffur gegenüber den in Fig.1-5 dargestellten Spannbetonhohlplatten. Die beschriebenen Betonmischungen lassen sich selbstverständlich auch für die Herstellung einer Spannbetonhohlplatte mit Querbewehrungen, wie sie vorangehend beschrieben wurden, verwenden, auch wenn dies hier nicht explizit dargestellt ist.

Die gegenüber dem Stand der Technik dermaßen abgeänderten Spannbetonhohlplatten weisen eine wesentlich höhere Brandbeständigkeit auf, was ihre Einstufung in die Feuerwiderstandsklasse F90 erlaubt.

### Bezugszeichenliste

- 1: oberer Plattenspiegel
- 2: unterer Plattenspiegel
- 3: Steg
- 4: Hohlraum
- 5: Spann litze
- 6: Außenfläche
- 7: Innenfläche
- 8: Stahlstab

## Patentansprüche

1. Spannbetonhohlplatte, umfassend
- einen oberen Plattenspiegel (1),
- einen unteren Plattenspiegel (2), welcher zum oberen Plattenspiegel (1) parallel ausgerichtet ist,
- entlang einer Längsrichtung der Platte ausgerichtete Stege (3), welche den unteren Plattenspiegel (2) mit dem oberen Plattenspiegel (1) verbinden,
- im unteren Plattenspiegel (2) im Bereich der Stege (3) in der Längsrichtung angeordnete und zu einer Außenfläche des unteren Plattenspiegels (2) mit einem vorgegebenen Mindestachsabstand beabstandete, vorgespannte Spannlitzen (5), **dadurch gekennzeichnet, dass**
- der untere Plattenspiegel (2) eine Dicke von mindestens dem Anderthalbfachen des Mindestachsabstands aufweist.

2. Spannbetonhohlplatte nach Anspruch 1, **dadurch gekennzeichnet, dass** der untere Plattenspiegel (2) eine Dicke von mindestens 7 cm aufweist.

3. Spannbetonhohlplatte nach Anspruch 1 oder 2, **dadurch gekennzeichnet, dass** im unteren Plattenspiegel (2) eine Querbewehrung angeordnet ist.

4. Spannbetonhohlplatte nach Anspruch 3, **dadurch gekennzeichnet, dass** die Querbewehrung als Stahlgitter ausgestaltet ist.

5. Spannbetonhohlplatte nach Anspruch 4, **dadurch gekennzeichnet, dass** das Stahlgitter aus Stahlstäben (8) zusammengesetzt ist, wobei der Durchmesser der Stahlstäbe (8) mindestens 3 mm beträgt, bevorzugt zwischen 5 mm und 7 mm, besonders bevorzugt bei 6 mm liegt und/oder der Abstand zweier benachbarter Stahlstäbe (8) im Stahlgitter zwischen 5 cm und 20 cm liegt.

6. Spannbetonhohlplatte nach einem der Ansprüche 3 bis 5, **dadurch gekennzeichnet, dass** die Querbewehrung unterhalb oder oberhalb der Spannlitzen (5) angeordnet ist.

7. Spannbetonhohlplatte nach dem Oberbegriff von Anspruch 1, **dadurch gekennzeichnet, dass** das Betonmaterial einen Anteil von bis zu 5 kg Polypropylenfasern pro m³ Beton enthält.

8. Spannbetonhohlplatte nach Anspruch 7, **dadurch gekennzeichnet, dass** der Anteil 2 kg beträgt und/oder die Polypropylenfasern eine mittlere Länge zwischen 5 mm und 30 mm und einen mittleren Durchmesser zwischen 5 µm und 40 µm aufweisen, besonders bevorzugt eine mittlere Länge von 12 mm und einen mittleren Durchmesser von 15,4 µm.

9. Betonmischung zur Herstellung einer Spannbetonhohlplatte, umfassend pro m³ Beton
- zwischen 300 kg und 380 kg Zement der Klasse CEM I 52,5 R und/oder der Klasse CEM II 52,5 R,
- zwischen 490 kg und 610 kg Splitt mit Korngrößen zwischen 8 mm und 11 mm,
- zwischen 500 kg und 690 kg Kies mit Korngrößen zwischen 2 mm und 8 mm,
- zwischen 490 kg und 700 kg Sand mit Korngrößen bis zu 2 mm,
- zwischen 95 kg und 140 kg Feinsand mit Korngrößen bis zu 1 mm, und
- einen Wasseranteil zwischen 80 l und 150 l.

10. Betonmischung nach Anspruch 9, umfassend pro m³ Beton
- 317 kg Zement der Klasse CEM I 52,5 R und/oder der Klasse CEM II 52,5 R, bevorzugt im gleichen Verhältnis,
- 594 kg Splitt mit Korngrößen zwischen 8 mm und 11 mm,
- 609 kg Kies mit Korngrößen zwischen 2 mm und 8 mm,
- 667 kg Sand mit Korngrößen bis zu 2 mm,
- 142 kg Feinsand mit Korngrößen bis zu 1 mm, und
- einen Wasseranteil von 126 l.

11. Betonmischung nach Anspruch 9 oder 10, umfassend außerdem einen Anteil von bis zu 5 kg Polypropylenfasern pro m³ Beton, bevorzugt mindestens 1 kg, besonders bevorzugt 2 kg.

12. Betonmischung nach Anspruch 11, **dadurch gekennzeichnet, dass** die Polypropylenfasern eine mittlere Länge zwischen 5 mm und 30 mm, bevorzugt von 12 mm und/oder eine mittlere Dicke zwischen 5 µm und 40 µm, bevorzugt von 15,4 µm aufweisen.

13. Verwendung einer Betonmischung, welche nach den Ansprüchen 11 oder 12 gefertigt wird, zur Herstellung einer Spannbetonhohlplatte, umfassend einen oberen Plattenspiegel (1), einen unteren Plattenspiegel (2), welcher zum oberen Plattenspiegel (1) parallel ausgerichtet ist, entlang einer Längsrichtung der Platte ausgerichtete Stege (3), welche den unteren Plattenspiegel (2) mit dem oberen Plattenspiegel (1) verbinden, und im unteren Plattenspiegel (2) im Bereich der Stege (3) in der Längsrichtung angeordnete und zu einer Außenfläche des unteren Plattenspiegels (2) mit einem vorgegebenen Mindestachsabstand beabstandete, vorgespannte Spannlitzen (5).

14. Verwendung einer Betonmischung, welche nach den Ansprüchen 9 bis 12 gefertigt wird, zur Herstellung einer Spannbetonhohlplatte nach einem der Ansprüche 1 bis 6.
